# EUROPEAN PATENT SPECIFICATION

(11) **EP 0 556 999 B1**
(45) Date of publication and mention of the grant of the patent: **27.05.1998**
(21) Application number: 93300948.2
(22) Date of filing: 10.02.1993
(51) Int. Cl.: G06F 3/033

(54) **Data processing apparatus with user input feedback**
Datenverarbeitungsgerät mit Rückmeldung der Benutzereingabe
Appareil de traitement de données doté d'une réaction (feedback) aux entrées de l'utilisateur

(30) Priority: 18.02.1992 US 840723
(43) Date of publication of application: 25.08.1993
(73) Proprietor: NCR International, Inc., Dayton, Ohio 45479 (US)
(72) Inventor: Hoevel, Lee Windsor, Dayton, Ohio 45419 (US)
(74) Representative: Irish, Vivien Elizabeth

(56) References cited:
- EP-A- 0 445 906
- WO-A-92/00559
- US-A- 4 885 565

## Description

The present invention relates to data processing apparatus.

When manually inputting data into a machine or system, the benefits of feedback to the user are well known. This feedback can serve to indicate to the user that he has accomplished his objective.

Data capture surfaces may include a digitizer or a combination of a display and an overlying transparent digitizer. The digitizer responds to pressure from a finger or writing instrument by generating a signal which is filtered, processed, and measured to determine the position of the pressure source on the digitizer.

When the data capture surface comprises a rigid surface, for example when an overlying transparent display forms the data capture surface, or when the surface is generally inflexible, a user is disadvantageously faced with the unfamiliar feel of a solid writing instrument such as a ballpoint pen or stylus against a hard and rigid surface.

It is an object of the present invention to provide data processing apparatus which does not have the above disadvantage.

In accordance with the present invention there is provided data processing apparatus having a data input surface and data input means for touching said surface so as to input data into said apparatus, detection means for providing a signal when said input means comes within a predetermined distance from said surface, and feedback means connected to said detection means for providing feedback to a user in response to receiving said signal, said feedback means comprising displacement means for displacing said surface in response to said signal characterized by surface mounting means for biasing said surface in a predetermined direction.

It should be understood that the term within a predetermined distance as used in the preceding paragraph includes a value of zero distance, such as when the data input means touches the surface.

It is an advantage of the present invention that a data capture system is provided with feedback in the form of displacement of the data capture surface when a data capture instrument touches the data capture surface so that the surface moves in response to use of the instrument.

The invention is described further hereinafter, by way of example only, with reference to the accompanying drawings in which:
Fig. 1 is a block diagram of apparatus embodying the present invention;
Fig. 2 shows a first type of data capture surface for use in the present invention;
Fig. 3 shows a second type of data capture surface for use in the present invention;
Fig. 4 shows a third type of data capture surface for use in the present invention;
Fig. 5 is a diagrammatic view of apparatus according to one embodiment of the present invention;
Fig. 6 is a diagrammatic view of apparatus according to another embodiment of the present invention; and
Fig. 7 is a diagrammatic view of apparatus according to a further embodiment of the present invention.

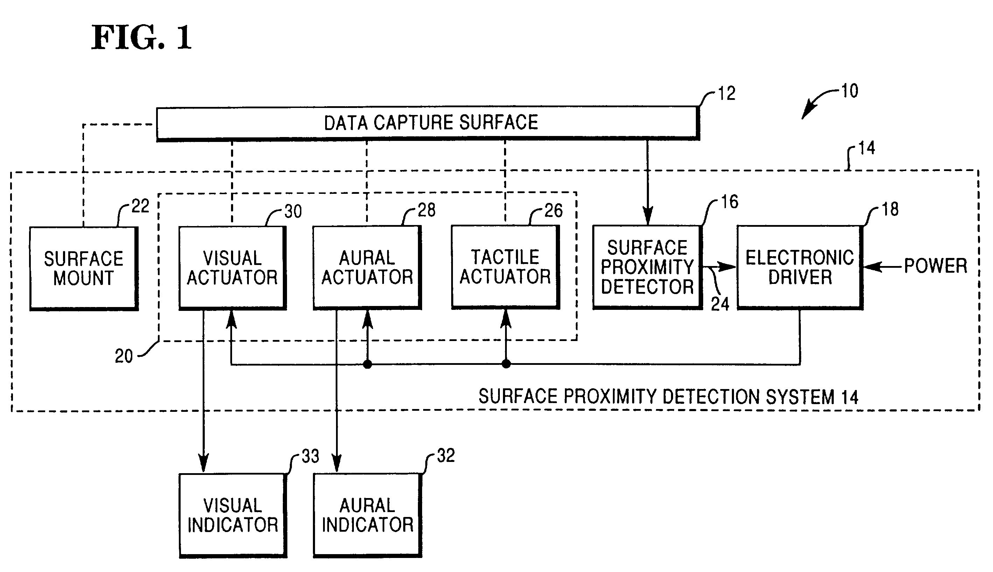

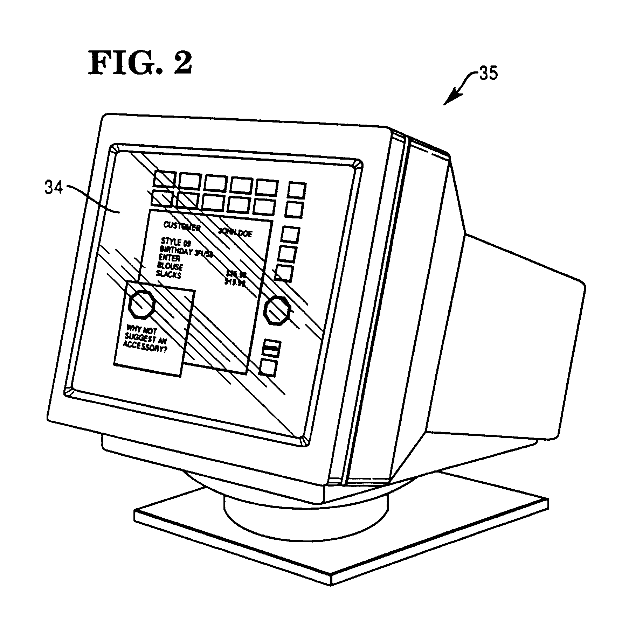

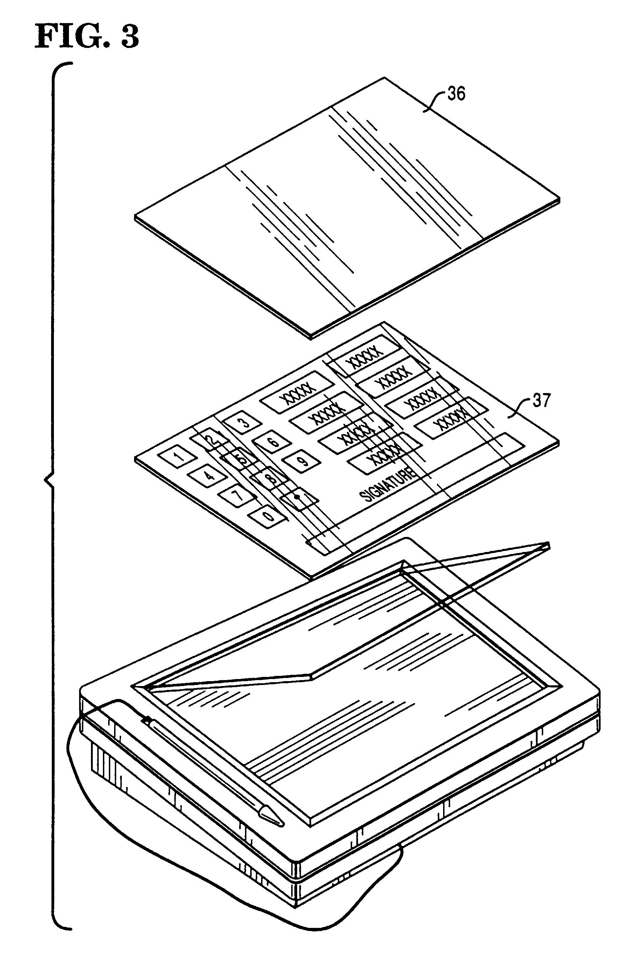

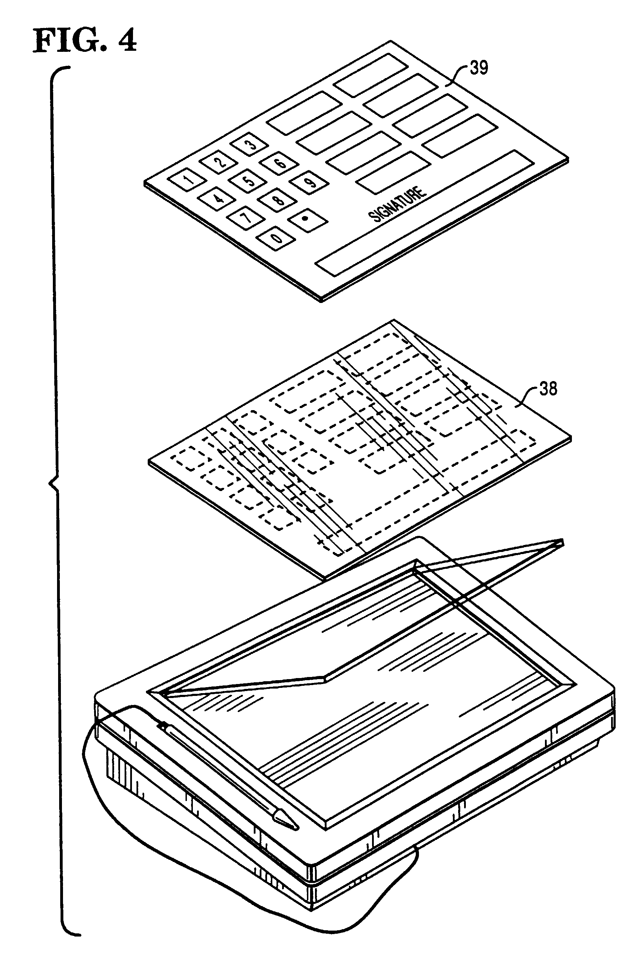

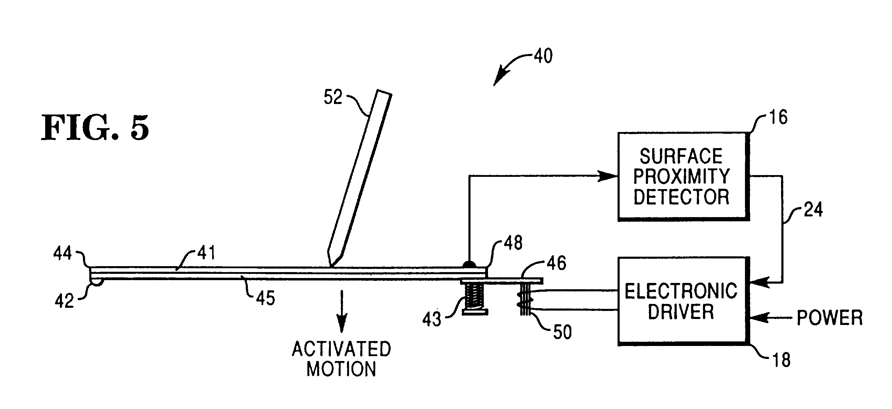

Referring now to Figs. 1-7, data capture system 10 of the present invention includes a data capture surface 12 and a surface proximity detection system 14. Data capture surface 12 may include a liquid crystal display with a transparent digitizer or one or more touch sensitive elements across its top surface (Figs. 5-7). It could be a touch sensitive element within a video monitor (Fig. 2). Alternatively, data capture surface 12 may be a hard surface with printed captions in blocks and a transparent digitizer or touch sensitive overlay to enable the selection of a particular block (Fig. 3). Finally, data capture surface 12 may be a resistive or other type of digitizer underneath an overlay containing printed indicia thereon (Fig. 4).

Surface proximity detection system 14 includes a surface proximity detector 16, an electronic driver 18, a feedback actuator 20, and a data capture surface mount 22. Surface proximity detector 16 senses when a data input instrument touches or comes within a predetermined distance of data capture surface 12 and provides a signal 24 to electronic driver 18.

Electronic driver 18 amplifies and rectifies signal 24 to a level sufficient to activate feedback actuator 20.

Feedback actuator 20 provides feedback to the user when a data input instrument touches or comes within a predetermined distance of data capture surface 12. Feedback actuator 20 may include a tactile actuator 26, an aural actuator 28, and a visual actuator 30.

Tactile actuator 26 displaces data capture surface 12 when a touch is applied to data capture surface 12. Displacement may assist or oppose the touch force. Preferably, tactile actuator 26 includes an electromagnet, and a metal plate affixed to data capture surface 12. Tactile actuator 26 works in conjunction with data capture surface mount 22 to displace data capture surface 12. Surface mount 22 may include a hinge at one end of data capture surface 12.

Aural actuator 28 actuates aural indicator 32 when a data capture instrument touches or comes within a predetermined distance of data capture surface 12.

Visual actuator 30 actuates visual indicator 33 when a data capture instrument touches or comes within a predetermined distance of data capture surface 12.

Turning now to Fig. 2, a touch sensitive element 34 is shown on a video monitor 35.

Turning now to Fig. 3, a transparent digitizer 36 is shown over a hard surface 37 having printed captions in blocks.

Turning now to Fig. 4, a resistive digitizer 38 is shown underneath an overlay 39 containing printed indicia thereon.

Turning now to Fig. 5, a first embodiment 40 of data capture system 10 is shown in which data capture surface 12 is a transparent digitizer 41 over a liquid crystal display 45. Data capture surface mount 22 includes a hinge 42 coupled to one end 44 of data capture surface 41, 45. Hinge 42 is normally biased by a spring 43 at the other end 48 of the surface 41,45 so that data capture surface 12 is in an upward position. Data capture surface 12 moves in a downward direction during a touch when an electromagnet 50 attracts plate 46 mounted at end 48 of data capture surface 12.

In operation, when pressure is applied by writing instrument 52, data capture surface 12 rotates about hinge 42 in opposition to spring force from spring 43. End 48 deflects downward with the aid of the magnetic force from electromagnet 50. Thus, the user is provided with a sensation of having pushed data capture surface 12. Tactile feedback may be accompanied by an audible or visual indication from aural and visual indicators 32 and 33.

Preferably, downward travel of end 48 is limited to as small as about five thousandths of an inch (0.13mm) to minimize any adverse effects, if any, on the writing process. For data capture surfaces incorporating simple push-button motions, the limit of travel may be significantly greater to achieve an appropriate sensation.

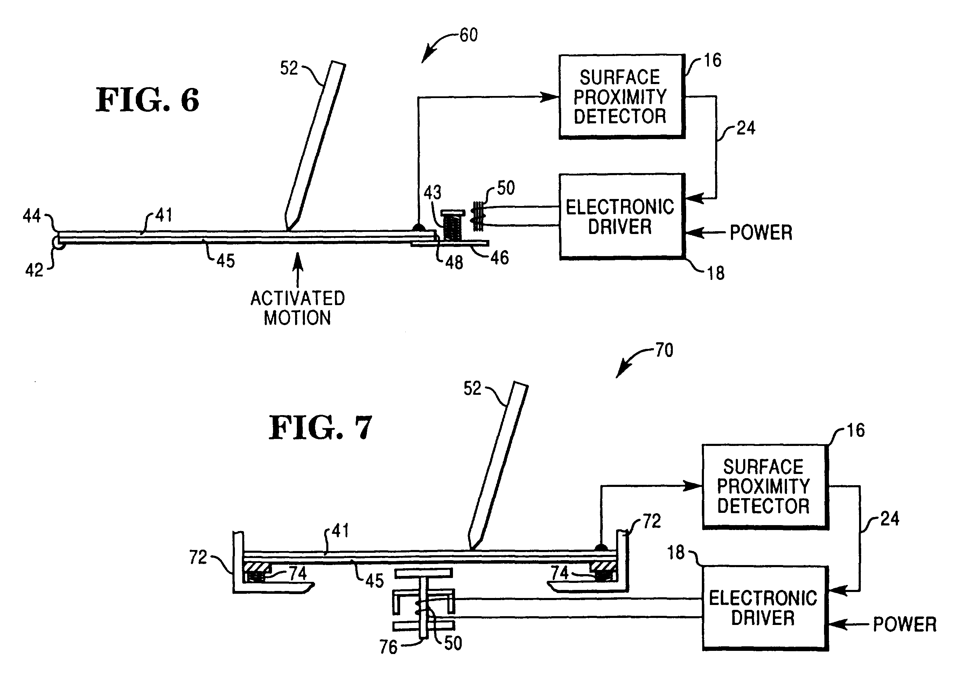

Referring now to Fig. 6, a second embodiment 60 of data capture system 10 of the present invention is shown. Embodiment 60 is similar to embodiment 40, except that activated motion is in an upward direction, opposing the direction of the touch force. Embodiment 60 provides increased sensation to the user and tends to keep writing instrument 52 in contact with data capture surface 12.

Referring now to Fig. 7, a third embodiment 70 of data capture system 10 is shown. Instead of using hinge 42, embodiment 70 supports data capture surface 12 with a supporting frame 72. Springs 74 or some other type of resilient means bias the data capture surface 12 away from supporting frame 72 in an upward direction. Tactile actuator 26 includes a T-shaped armature 76, which moves upward to impact data capture surface 12 when electromagnet 50 is energized by contact from data capture instrument 52 with data capture surface 12. Magnitude and duration of tactile, aural, or visual sensations are established by the signal input to electromagnet 50, the weight and travel of armature 76, and the type of material from which the impacting surfaces are made. While embodiment 70 illustrates upward motion of armature 76, a downward direction of motion can be easily obtained by changes in the mechanical mounting of armature 76.

## Claims

1. Data processing apparatus having a data input surface (12) and data input means (52) for touching said surface (12), so as to input data into said apparatus, detection means (16) for providing a signal when said input means (52) comes within a predetermined distance from said surface (12) feedback means (20) connected to said detection means (16) for providing feedback to a user in response to receiving said signal, said feedback means (20) comprising displacement means (26) for displacing said surface (12) in response to said signal, characterized by surface mounting means (22) for biasing said surface (12) in a predetermined direction.

2. Apparatus according to claim 1, characterized in that said surface mounting means (22) comprises hinge means (42) at one end of said surface (12) and resilient means (43) at another end of said surface (12) for biasing said surface (12) in a predetermined direction.

3. Apparatus according to claim 1, characterized in that said surface mounting means (22) comprises frame member (72) for displaceably supporting said surface (12) and resilient means (74) mounted between said surface (12) and said frame member (72) for biasing said surface (12) in a predetermined direction.

4. Apparatus according to any of claims 1 to 3, characterized in that said predetermined direction is in the same direction as the touch.

5. Apparatus according to any of claims 1 to 3, characterized in that said predetermined direction is in the opposite direction to the touch.

6. Apparatus according to any of claims 1 to 3, characterized in that said displacement of said surface (12) is in the same direction as the touch or is in the opposite direction to the touch.

7. Apparatus according to claim 2 or 3, characterized in that said displacement means includes an actuator means (26) comprising plate means (46) coupled to said data output surface (12) and electromagnetic means (50) for attracting said plate means and thereby displacing said surface.

8. Apparatus according to claim 7, characterized in that said plate means (46) is affixed to said data output surface (12).

9. Apparatus according to claim 2 or 3, characterized in that said displacement means includes an actuator means (26) comprising a plunger means (76) for displacing said surface (12) in a predetermined direction and electromagnetic means (50) for driving said plunger means (76).

10. Apparatus according to claim 9, characterized in that said plunger mean (76) impacts said surface (12) when said electromagnetic means (50) is energized.

11. Apparatus according to claim 1, characterized in that said displacement means (26) includes a driver (18) for amplifying and rectifying said signal from said detecting means (16).

12. Apparatus according to any one of the preceding claims, characterized in that said data input surface (12) comprises a digitizer layer (41) and a display layer (45).

## Patentansprüche

1. Datenverarbeitungsvorrichtung aufweisend eine Dateneingabefläche (12) und ein Dateneingabemittel (52) zum Berühren der Fläche (12), um Daten in das Gerät einzugeben, eine Erfassungseinrichtung (16) zur Lieferung eines Signals, wenn das Eingabemittel (52) in einen vorbestimmten Abstand zu der Fläche (12) gelangt, eine Rückkopplungseinrichtung (20), die mit der Erfassungseinrichtung (16) verbunden ist, um unter Ansprechen auf den Empfang des Signals Rückmeldung an einen Benutzer zu erstatten, wobei die Rückkopplungseinrichtung (20) eine Versetzungseinrichtung (26) aufweist, um die Fläche (12) unter Ansprechen auf das Signal zu verlagern,
gekennzeichnet durch
eine Flächenbefestigungseinrichtung (22) zum Spannen der Fläche (12) in eine vorbestimmte Richtung.

2. Vorrichtung nach Anspruch 1, dadurch gekennzeichnet, daß die Flächenbefestigungseinrichtung (22) an einem Ende der Fläche (12) eine Gelenkeinrichtung (42) und am anderen Ende der Fläche (12) eine Federeinrichtung (43) aufweist, um die Fläche in eine vorbestimmte Richtung zu spannen.

3. Vorrichtung nach Anspruch 1, dadurch gekennzeichnet, daß die Flächenbefestigungseinrichtung (22) ein Rahmenelement (72) zur verschiebbaren Lagerung der Fläche (12) und eine Federeinrichtung (74) aufweist, die zwischen der Fläche (12) und dem Rahmenelement (72) befestigt ist, um die Fläche (12) in eine vorbestimmte Richtung zu spannen.

4. Vorrichtung nach einem der Ansprüche 1 bis 3, dadurch gekennzeichnet, daß die vorbestimmte Richtung in derselben Richtung wie die Berührung liegt.

5. Vorrichtung nach einem der Ansprüche 1 bis 3, dadurch gekennzeichnet, daß die vorbestimmte Richtung in Gegenrichtung zur Berührung liegt.

6. Vorrichtung nach einem der Ansprüche 1 bis 3, dadurch gekennzeichnet, daß die Versetzung der Fläche (12) in derselben Richtung wie die Berührung oder in Gegenrichtung zur Berührung erfolgt.

7. Vorrichtung nach Anspruch 2 oder 3, dadurch gekennzeichnet, daß die Versetzungseinrichtung eine Betätigungsvorrichtung (26) mit einer Platteneinrichtung (46) aufweist, die an die Datenausgabefläche (12) und eine elektromagnetische Einrichtung (50) gekoppelt ist, um die Platteneinrichtung anzuziehen und dadurch die Fläche (12) zu verschieben.

8. Vorrichtung nach Anspruch 7, dadurch gekennzeichnet, daß die Platteneinrichtung (46) an der Datenausgabefläche (12) angebracht ist.

9. Vorrichtung nach Anspruch 2 oder 3, dadurch gekennzeichnet, daß die Versetzungseinrichtung eine Betätigungsvorrichtung (26) mit einer Kolbeneinrichtung (76) zum Verschieben der Fläche (12) in eine vorbestimmte Richtung und eine elektromagnetische Einrichtung (50) zum Antreiben der Kolbeneinrichtung (76) aufweist.

10. Vorrichtung nach Anspruch 9, dadurch gekennzeichnet, daß die Kolbeneinrichtung (76) auf der Fläche (12) aufschlägt, wenn die elektromagnetische Einrichtung (50) betätigt wird.

11. Vorrichtung nach Anspruch 1, dadurch gekennzeichnet, daß die Versetzungseinrichtung (26) einen Treiber (18) aufweist, um das Signal von der Erfassungseinrichtung (16) zu verstärken und gleichzurichten.

12. Vorrichtung nach einem der vorhergehenden Ansprüche, dadurch gekennzeichnet, daß die Dateneingabefläche (12) eine Digitalumsetzerschicht (41) und eine Anzeigeschicht (45) aufweist.

## Revendications

1. Un instrument de traitement de données ayant une surface d'entrée de données (12) et un moyen d'entrée de données (52) pour toucher ladite surface (12), afin d'entrer les données dans ledit instrument, un moyen de détection (16) pour fournir un signal lorsque ledit moyen d'entrée (52) se trouve dans une marge de distance prédéterminée de ladite surface (12), un moyen de réponse (20) connecté audit moyen de détection (16) pour fournir un retour à un utilisateur en réponse à la réception dudit signal, ledit moyen de réponse (20) comprenant un moyen de déplacement (26) pour déplacer ladite surface (12) en réponse au dit signal, caractérisé par un moyen de montage de la surface (22) pour diriger la dite surface (12) dans une direction prédéterminée.

2. Un instrument selon la revendication 1, caractérisé par le fait que ledit moyen de montage de la surface (22) comporte un moyen d'articulation (42) à une extrémité de ladite surface (12) et un moyen élastique (43) à l'autre extrémité de ladite surface (12) pour diriger ladite surface (12) dans une direction prédéterminée.

3. Un instrument selon la revendication 1, caractérise par le fait que ledit moyen de montage de la surface (22) comporte un cadre (72) pour soutenir de façon mobile ladite surface (12) et un moyen élastique (74) monté entre ladite surface (12) et ledit cadre (72) pour diriger ladite surface (12) dans une direction prédéterminée.

4. Un instrument selon l'une ou l'autre des revendications 1 à 3, caractérisé par le fait que ladite direction prédéterminée est la même que celle du toucher appliqué.

5. Un instrument selon l'une ou l'autre des revendications 1 à 3, caractérisé par le fait que ladite direction prédéterminée est opposée à celle du toucher appliqué.

6. Un instrument selon l'une ou l'autre des revendications 1 à 3, caractérisé par le fait que ledit déplacement de ladite surface (12) a la même direction que celle du toucher appliqué ou la direction opposée à celle du toucher appliqué.

7. Un instrument selon les revendications 2 ou 3, caractérisé par le fait que ledit moyen de déplacement comprend un moyen de déclenchement (26) comprenant un intermédiaire sous forme de plaque (46) couplé à ladite surface de sortie de données (12) et un intermédiaire électromagnétique (50) pour attirer ledit intermédiaire sous forme de plaque et ainsi déplacer ladite surface.

8. Un instrument selon la revendication 7, caractérise par le fait que ledit intermédiaire sous forme de plaque (46) est fixé a ladite surface (12) de sortie de données.

9. Un instrument selon les revendications 2 ou 3, caractérisé par le fait que ledit moyen de déplacement comprend un moyen de déclenchement (26) comportant un intermédiaire sous forme de poussoir (76) pour déplacer ladite surface (12) dans une direction prédéterminée et un intermédiaire électromagnétique (50) pour diriger ledit intermédiaire sous forme de poussoir (76).

10. Un instrument selon la revendication 9, caractérisé par le fait que ledit intermédiaire sous forme de poussoir (76) percute ladite surface (12) lorsque ledit intermédiaire électromagnétique (50) est alimenté.

11. Un instrument selon la revendication 1, caractérisé par le fait que ledit moyen de déplacement (26) comprend un driver (18) pour amplifier et rectifier ledit signal en provenance dudit moyen de détection (16).

12. Un instrument selon l'une ou l'autre des revendications précédentes, caracterisé par le fait que ladite surface (12) de saisie de données comprend une membrane avec un numériseur (41) et une membrane d'affichage (45).
